# EUROPÄISCHE PATENTANMELDUNG

(11) **EP 4 311 458 A1**
(43) Veröffentlichungstag der Anmeldung: **31.01.2024**
(21) Anmeldenummer: 23186691.4
(22) Anmeldetag: 20.07.2023
(51) Int. Cl.: A47J 31/42, A47J 42/38, A47J 42/08, A47J 42/44

(54) **VERFAHREN ZUR REGELUNG EINER KAFFEEPULVERMENGE, KAFFEEAUTOMAT UND COMPUTERPROGRAMMPRODUKT**

(30) Priorität: 28.07.2022 DE 102022207807
(71) Anmelder: BSH Hausgeräte GmbH, 81739 München (DE)
(72) Erfinder: Schreiner, Thomas, 84419 Schwindegg (DE); Gallinger, Simon, 83301 Traunreut (DE)

(57) **Zusammenfassung**

Die Erfindung betrifft ein Verfahren zur Regelung einer Kaffeepulvermenge bei einem Kaffeeautomaten (1) mit einem einstellbaren Mahlwerk (2), umfassend die Schritte:
a) ermitteln oder beziehen eines Kennwerts einer mit dem Mahlwerk (2) gemahlenen Kaffeepulvermenge eines vorhergegangenen Brühvorgangs, insbesondere eines direkt vorhergegangenen Brühvorgangs,
b) ermitteln oder beziehen eines Zielwerts für eine für einen nachfolgenden Brühvorgang erforderte Zielkaffeepulvermenge,
c) festlegen einer Mahldauer für den nachfolgenden Brühvorgang, und
d) ansteuern des Mahlwerks für die in Schritt c) festgelegte Mahldauer,
wobei ein Einstellparameter des einstellbaren Mahlwerks (2) je in Schritt a) und in Schritt c) ermittelt oder bezogen wird und wobei in Schritt c) der Kennwert aus Schritt a), der Zielwert aus Schritt b) und der Einstellparameter das Festlegen der Mahldauer beeinflussen.

Die Erfindung betrifft auch einen Kaffeeautomaten (1) mit einer entsprechend programmierten Steuervorrichtung (5) und ein entsprechendes Computerprogrammprodukt umfassend dementsprechende Befehle.

## Beschreibung

Die vorliegende Anmeldung betrifft ein Verfahren zur Regelung einer Kaffeepulvermenge, einen dementsprechenden Kaffeeautomaten und ein diesbezügliches Computerprogrammprodukt.

Es ist bekannt, dass bei Kaffeeautomaten eine Änderung eines Mahlgrads oder einer Pulvermenge des durch ein Mahlwerk gemahlenen Pulvers eine Brühqualität oder Getränkequalität beeinflusst, z.B. aus der DE 10 2010 063 947 A1. Hierfür ist es bei dem Kaffeeautomaten der DE 10 2010 063 947 A1 vorgesehen, dass vor- und nach einem Brühvorgang eine gemahlene Kaffeepulvermenge ermittelt wird, daraus auf einem Mahlgrad geschlossen wird, und diese Daten für nachfolgende Brühvorgänge verwendet werden.

Zudem ist aus der DE 10 2019 204 620 A1 eine Einstelleinrichtung zum Einstellen eines Mahlgrads eines Mahlwerks mittels eines Elektromotors bekannt, sowie ein Kaffeeautomat mit einer derartigen Einstelleinrichtung.

Jedoch hat sich herausgestellt, dass die Ermittlung der Pulvermenge nach dem oben genannten Verfahren einerseits erheblichen Aufwand in der Herstellung des Kaffeeautomaten erfordert, z.B. da Toleranzen bei einem Herstellprozess oder durch eine Abnutzung über eine Lebensdauer das Einhalten der nötigen Genauigkeit erschweren, andererseits eine zeitliche Verzögerung jedes Brühvorgangs bewirken kann, z.B. durch die benötigte Erfassung vor- und nach dem Brühvorgang. Zudem hat sich herausgestellt, dass eine Änderung der Einstellung des Mahlgrads mittels der oben genannten Einstelleinrichtung wesentlich häufiger vorgenommen wird, als z.B. laut der DE 10 2010 063 947 A1 angenommen wurde. Der Umstand, dass eine Änderung des Mahlgrads durch derartige Verfahren erst nach dem nachfolgenden Brühvorgang ermittelt werden kann und daher Daten erst für den übernächsten Brühvorgang verfügbar sind, wirkt sich daher besonders nachteilig aus. Darüber hinaus hat sich auch herausgestellt, dass eine Änderung der Einstellung des Mahlgrads auch einen Mahlwerksdurchsatz oder Pulverdurchsatz beeinflusst, d.h. die in einem definierten Zeitrahmen tatsächlich durch mahlen bereitgestellte Menge an Kaffeepulver. Dieser Effekt ist insbesondere bei Scheibenmahlwerken feststellbar. Im Extremfall einer Änderung der Einstellung des Mahlgrads für jeden Brühvorgang würde demnach ggf. mit dem genannten Verfahren nie ein tatsächlich zutreffender Wert ermittelt.

Die Aufgabe der Erfindung ist es daher, die genannten Nachteile zu verbessern, insbesondere eine einfache, präzise und gleichermaßen schnelle Regelung einer Kaffeepulvermenge zu ermöglichen.

Diese Aufgabe wird gelöst durch ein Verfahren nach Anspruch 1, durch einen Kaffeeautomaten nach Anspruch 9 und durch ein Computerprogrammprodukt nach Anspruch 10. Vorteilhafte Weiterbildungen sind Gegenstand der abhängigen Ansprüche.

Das erfindungsgemäße Verfahren zur Regelung einer Kaffeepulvermenge bei einem Kaffeeautomaten mit einem einstellbaren Mahlwerk, umfasst die Schritte:
a) ermitteln oder beziehen eines Kennwerts einer mit dem Mahlwerk gemahlenen Kaffeepulvermenge eines vorhergegangenen Brühvorgangs, insbesondere eines direkt vorhergegangenen Brühvorgangs,
b) ermitteln oder beziehen eines Zielwerts für eine für einen nachfolgenden Brühvorgang erforderte Zielkaffeepulvermenge,
c) festlegen einer Mahldauer für den nachfolgenden Brühvorgang, und
d) ansteuern des Mahlwerks für die in Schritt c) festgelegte Mahldauer,
und zeichnet sich dadurch aus, dass ein Einstellparameter des einstellbaren Mahlwerks je in Schritt a) und in Schritt c) ermittelt oder bezogen wird und dass in Schritt c) der Kennwert aus Schritt a), der Zielwert aus Schritt b) und der Einstellparameter das Festlegen der Mahldauer beeinflussen. Der Ausdruck "Regelung einer Kaffeepulvermenge" bezieht sich hierbei insbesondere auf die für einen, insbesondere direkt nachfolgenden, Brühvorgang benötigte Portion an frisch gemahlenem Kaffeepulver.

Das erfindungsgemäße Verfahren beruht auf dem allgemeinen Gedanken, nicht nur Daten, die beim vorhergehenden Brühvorgang ermittelt wurden, für nachfolgende Brühvorgänge zu verwenden, sondern auch vorgenommene Änderungen von Einstellparametern. In Schritt a) wird ein Kennwert der mit dem Mahlwerk beim vorhergegangenen Brühvorgang gemahlenen Pulvermenge ermittelt oder bezogen. Die Erfindung macht sich hier die Erkenntnis zu Nutze, dass auch die tatsächlich mit dem Mahlwerk gemahlenen Kaffeepulvermenge eines vorhergegangenen Brühvorgangs durch die dabei vorliegende Einstellung des einstellbaren Mahlwerks beeinflusst sein kann. Beispielsweise bewirkt eine Änderung der Einstellung des Mahlwerks in Richtung eines feineren Mahlgrads einen geringen Mahlwerksdurchsatz und damit eine geringere Pulvermenge. Es kann eine sogenannte Kennfeldtabelle erstellt werden, die einen Referenzdurchsatz für jede mögliche Einstellung des Mahlwerks und/oder deren Änderung umfasst, die in einer Steuervorrichtung des Kaffeeautomaten hinterlegt werden kann, z.B. bei dessen Herstellung. Wurde z.B. die Einstellung des einstellbaren Mahlwerks für den direkt vorhergegangenen Brühvorgang um einen Einstellwert in Richtung eines feineren Mahlgrads verstellt, würde bei unveränderter Mahldauer weniger Pulver erzeugt und danach auch ermittelt. Nach dem eingangs genannten Verfahren würde die Mahldauer für den nächsten Brühvorgang entsprechend verlängert, um die feinere Einstellung des einstellbaren Mahlwerks zu kompensieren. Wenn jedoch für den folgenden Brühvorgang das einstellbare Mahlwerk in Richtung eines gröberen Mahlgrads verstellt wird erhöht sich der Mahlwerksdurchsatz entsprechend und es würde zu viel Pulver erzeugt werden. Daher kann der Kennwert gemäß Schritt a) neben der erzeugten Menge an Pulver beim vorhergegangenen Brühvorgang auch den dabei verwendeten Einstellparameter des einstellbaren Mahlwerks beinhalten. Erfindungsgemäß kann ein besonders präziser Kennwert der mit dem Mahlwerk beim vorhergegangenen Brühvorgang gemahlenen Kaffeepulvermenge besonders schnell erhalten werden. Wenn die Einstellung des Mahlwerks für viele Brühvorgänge hintereinander nicht geändert wird, liefert das erfindungsgemäße Verfahren daher vergleichbare Ergebnisse, wie die eingangs genannten Verfahren, jedoch auf einem anderen Weg. Wenn jedoch die Einstellung des Mahlwerks geändert wird, ermöglicht das erfindungsgemäße Verfahren schon bei der Ermittlung des Kennwerts der mit dem Mahlwerk vorhergehend gemahlenen Kaffeepulvermenge eine höhere Präzision. Wird der Kennwert bezogen, z.B. anhand eines Einstellwertes aus einer Kennfeldtabelle, wie oben beschrieben, ausgelesen, ermöglicht das erfindungsgemäße Verfahren zumindest ein besonders schnelles und einfaches Erhalten des Kennwerts der mit dem Mahlwerk beim vorhergegangenen Brühvorgang gemahlenen Kaffeepulvermenge. In beiden Fällen kann der Kennwert besonders Vorteilhaft die Menge des gemahlenen Pulvers repräsentieren. Wird die Einstellung des Mahlwerks für den nachfolgenden Brühvorgang geändert, ermöglicht das erfindungsgemäße Verfahren wiederum eine besonders schnelle und präzise Festlegung der benötigten Mahldauer für den nachfolgenden Brühvorgang.

Bei einer vorteilhaften Weiterbildung des erfindungsgemäßen Verfahrens ist der Einstellparameter eine Mahlgradeinstellung. Dadurch kann direkt der Einstellparameter beim Festlegen der Mahldauer einbezogen werden, der bei einer Änderung den Mahlwerksdursatz maßgeblich beeinflusst. Durch einen Abgleich der Mahlgradeinstellung beim vorhergegangenen Brühvorgang und für den nachfolgenden Brühvorgang kann besonders schnell und schon im Vorfeld des nachfolgenden Brühvorgangs bewertet werden, ob diesbezüglich eine Korrektur der Mahldauer erforderlich ist und welche, oder nicht.

Bei einer weiteren vorteilhaften Weiterbildung des erfindungsgemäßen Verfahrens ist die Mahlgradeinstellung ein bezogener Mahlgradzielwert. Dies ermöglicht ein gleichermaßen günstiges und besonders schnelles Erhalten des Einstellparameters, weil kein aufwändiger Ermittlungsschritt vollzogen werden muss. Dadurch kann eine annehmbare Genauigkeit besonders schnell erreicht werden.

Bei einer alternativen vorteilhaften Weiterbildung des erfindungsgemäßen Verfahrens ist die Mahlgradeinstellung ein ermittelter Mahlgradmesswert. Zwar muss hierfür ein Ermittlungsschritt vollzogen werden, jedoch liegt dann ein besonders präziser Messwert für den tatsächlich vorliegenden Mahlgrad und somit eine besonders hohe Genauigkeit vor.

Bei einer weiteren vorteilhaften Weiterbildung des erfindungsgemäßen Verfahrens ist der Mahlgradmesswert ein mittels eines Potentiometers ermittelter Mahlscheibenabstand. Der sich tatsächlich einstellende Mahlgrad wird in erheblichem Maße durch den Abstand der Mahlscheiben bestimmt. Die Ermittlung dieses Abstands mit dem Potentiometer ermöglicht es, den tatsächlich vorliegenden Mahlgrad sehr genau zu erfassen, jedoch bereits bevor tatsächlich gemahlen wird. Daher wird eine besonders hohe Genauigkeit besonders schnell ermöglicht, nämlich z.B. bereits während oder vor dem Mahlvorgang.

Bei einer weiteren vorteilhaften Weiterbildung des erfindungsgemäßen Verfahrens ist der Kennwert der mit dem Mahlwerk gemahlenen Kaffeepulvermenge ein bezogener

Kaffeepulvermengenzielwert. Dies ermöglicht ein gleichermaßen günstiges und besonders schnelles Erhalten des Kennwerts, weil kein aufwändiger Ermittlungsschritt vollzogen werden muss. Dadurch kann eine annehmbare Genauigkeit besonders schnell erreicht werden.

Bei einer alternativen vorteilhaften Weiterbildung des erfindungsgemäßen Verfahrens ist der Kennwert der mit dem Mahlwerk gemahlenen Kaffeepulvermenge ein ermittelter Kaffeepulvermengenmesswert. Zwar muss hierfür ein Ermittlungsschritt vollzogen werden, jedoch liegt dann ein besonders präziser Messewert für den tatsächlich vorliegenden Kennwert und somit eine besonders hohe Genauigkeit vor. Die Kaffeepulvermenge kann beispielsweise dadurch ermittelt werden, dass das Kaffeepulver in eine zylindrische Brühkammer mit definiertem Durchmesser eingefüllt wird, mit einer definierten Kraft verpresst wird und dann eine verbleibende Höhe entlang der Rotationsachse der Zylinderform ermittelt wird. Insbesondere kann auch dabei der Einstellparameter respektive die Mahlgradeinstellung einbezogen werden, da auch der Mahlgrad einen Einfluss darauf hat, wie stark sich das Kaffeepulver komprimieren lässt. Beispielsweise mittels einer im Vorfeld erstellten und hinterlegten Kennfeldtabelle kann dann ein noch genauerer Messewert für den tatsächlich vorliegenden Kennwert erhalten werden.

Bei einer weiteren vorteilhaften Weiterbildung des erfindungsgemäßen Verfahrens wird zum Festlegen der Mahldauer anhand des Einstellparameters eine Referenzkurve berücksichtigt, die einen Referenzmahlwerksdurchsatz auf einer Referenzmahlgradeinstellung einschließt. Dadurch kann einerseits auf eine Ermittlung des Einstellparameters verzichtet werden, ohne beim beziehen größere Einbußen bei der Genauigkeit in Kauf nehmen zu müssen, und andererseits kann bei einer Ermittlung erfasst werden ob sich Abweichungen z.B. durch Verschleiß ergeben, die wiederum kompensiert werden können.

Eine Lösung der eingangs genannten Aufgabe wird auch bereitgestellt durch einen Kaffeeautomaten mit einer Steuervorrichtung die eingerichtet und programmiert ist, die Schritte des hier beschriebenen Verfahrens durchzuführen, d.h. des erfindungsgemäßen Verfahrens, ggf. auch mit den entsprechenden Weiterbildungen. Dadurch wird eine einfache, präzise und gleichermaßen schnelle Regelung der Kaffeepulvermenge ermöglicht.

Eine Lösung der eingangs genannten Aufgabe wird auch bereitgestellt durch ein Computerprogrammprodukt, umfassend Befehle, die bei der Ausführung des Programms durch eine Steuervorrichtung, insbesondere die eines Kaffeeautomaten, die Steuervorrichtung veranlassen, die Schritte des hier beschriebenen Verfahrens durchzuführen, d.h. des erfindungsgemäßen Verfahrens, ggf. auch mit den entsprechenden Weiterbildungen. Dadurch wird nicht nur eine einfache, präzise und gleichermaßen schnelle Regelung der Kaffeepulvermenge ermöglicht. Es können beispielsweise auch bereits ausgelieferte Kaffeeautomaten mit entsprechenden Einrichtungen jedoch ohne entsprechender Programmierung sehr einfach über ein Firmware-Update oder eine entsprechende App mittels einer Internetverbindung nachgerüstet werden. Dadurch kann auch eine besonders nachhaltige Lösung der eingangs genannten Aufgabe bereitgestellt werden.

Im Folgenden wird das Prinzip der Erfindung anhand einer Zeichnung beispielhaft noch näher erläutert. In der Zeichnung zeigen:
- Fig. 1:: eine schematische Darstellung eines Kaffeeautomaten mit einem einstellbaren Mahlwerk in der Seitenansicht im Teilschnitt, und
- Fig. 2:: eine schematische Darstellung einer Ermittlung des Kaffeepulvermengenmesswert in einer Brüheinheit des Kaffeeautomaten.

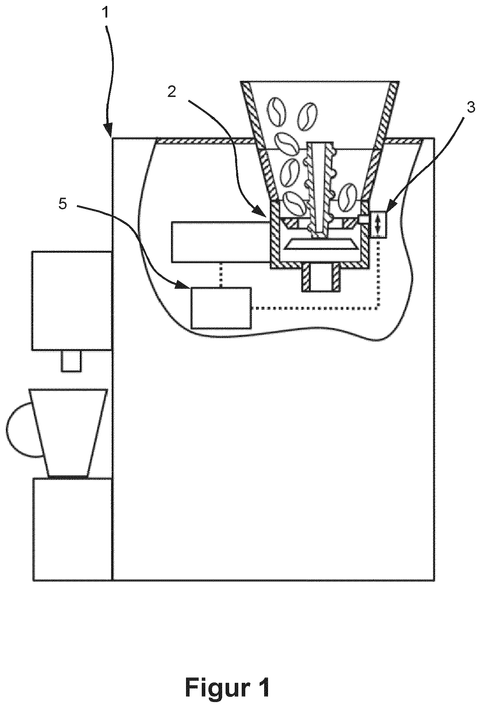

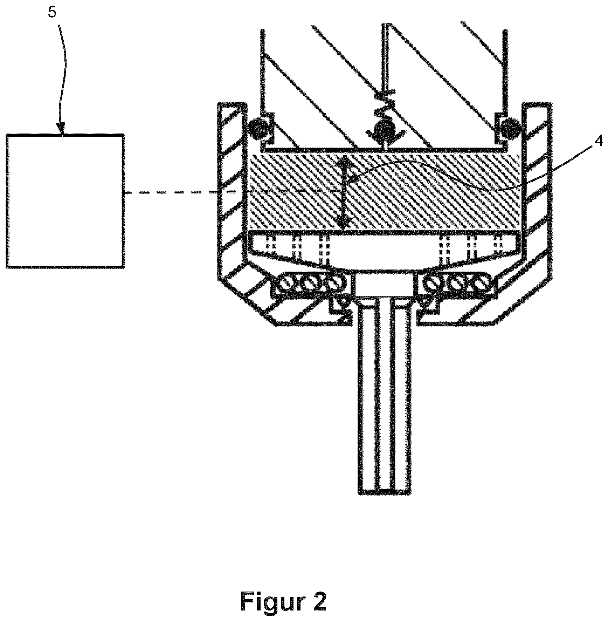

In Figur 1 ist ein Kaffeeautomat 1 mit einem einstellbaren Mahlwerk 2 erkennbar, der das im Folgenden näher beschriebene Verfahren zur Regelung einer Kaffeepulvermenge durchführt. In Figur 2 ist eine schematische Darstellung einer Brüheinheit des Kaffeeautomaten bei einer Ermittlung eines Kaffeepulvermengenmesswerts 4 dargestellt.

Das Verfahren zur Regelung der Kaffeepulvermenge umfasst dabei die Schritte:
a) ermitteln eines Kennwerts einer mit dem Mahlwerk 2 gemahlenen Kaffeepulvermenge eines direkt vorhergegangenen Brühvorgangs, nämlich des Kaffeepulvermengenmesswerts 4, der im vorliegenden Beispiel bei der direkt vorhergegangenen Zubereitung eines großen Kaffee Crema mit einer milden Stärkeeinstellung ermittelt wurde,
b) ermitteln eines Zielwerts für eine für einen nachfolgenden Brühvorgang erforderte Zielkaffeepulvermenge, die für einen beispielhaft ausgewählten nachfolgend zuzubereitenden Ristretto in einer kräftigen Stärkeeinstellung mit 13 Gramm ermittelt wird,
c) festlegen einer Mahldauer für den nachfolgenden Brühvorgang, und
d) ansteuern des Mahlwerks für die in Schritt c) festgelegte Mahldauer,
wobei ein Einstellparameter des einstellbaren Mahlwerks 2 je in Schritt a) und in Schritt c) ermittelt oder bezogen wird und wobei in Schritt c) der Kennwert aus Schritt a), d.h. der Kaffeepulvermengenmesswerts 4, der Zielwert aus Schritt b) und der Einstellparameter das Festlegen der Mahldauer beeinflussen.

Im vorliegenden Beispiel ist der Einstellparameter eine Mahlgradeinstellung, die als Mahlgradmesswert ein mittels eines Potentiometers 3 ermittelter Mahlscheibenabstand ist, und der als Einstellparameter verstellbar ist. Folglich ist der Einstellparameter hier der ermittelte Mahlscheibenabstand. Beim direkt vorhergehenden Brühvorgang wurde für die charakteristische Zubereitung des großen milden Kaffee Crema ein größtmöglicher Mahlscheibenabstand für einen möglichst groben Mahlgrad eingestellt. Für die charakteristische Zubereitung des starken Ristrettos in dem direkt nachfolgenden Brühvorgang wird ein kleinstmöglicher Mahlscheibenabstand für einen möglichst feinen Mahlgrad eingestellt. Daher ist ein Kaffeepulverdurchsatz des einstellbaren Mahlwerks 2 bei der Herstellung des Kaffeepulvers für den vorhergehenden Brühvorgang deutlich höher, als bei der Herstellung des Kaffeepulvers für den nachfolgenden Brühvorgang. Nach dem eingangs genannten Verfahren würde daher aus der gemessenen Kaffeepulvermenge beim vorhergehenden Brühvorgang abgeleitet, dass die Mahldauer für den direkt nachfolgenden Brühvorgang verkürzt werden sollte, was zusammen mit der feineren Einstellung eine viel zu geringe Menge an Kaffeepulver, kleiner als 15 Sekunden, ergeben würde.

Die Ermittlung des Kaffeepulvermengenmesswerts 4 des direkt vorhergegangenen Brühvorgangs gemäß dem hier beschriebenen Verfahren ist in Figur 2 stilisiert. Der Kaffeepulvermengenmesswert 4 wird dadurch gewonnen, dass die Pulvermenge in eine stilisiert dargestellte Brühkammer gefüllt wird, mit einer vorbestimmten Kraft verpresst wird und das Volumen im verpressten Zustand durch Erfassen einer verbleibenden verpressten Höhe bei definiertem Durchmesser der Brühkammer ermittelt wird. In Figur 2 ist jedoch nicht erkennbar, dass dabei auch der bei der Herstellung des Kaffeepulvers ermittelte Mahlscheibenabstand mitberücksichtigt ist. Dadurch ist der Kaffeepulvermengenmesswert 4 der mit dem Mahlwerk beim vorhergegangenen Brühvorgang gemahlenen Kaffeepulvermenge besonders präzise.

Um die geschilderten Nachteile des eingangs genannten Verfahrens zu verhindern enthält beim Verfahren gemäß dem vorliegenden Beispiel der Kaffeepulvermengenmesswert 4 neben der erzeugten Menge an Pulver beim vorhergegangenen Brühvorgang auch den dabei verwendeten ermittelten Mahlscheibenabstand des einstellbaren Mahlwerks 2. Hierfür wurde in einer Steuervorrichtung 5 des Kaffeeautomaten 1 bei dessen Herstellung eine sogenannte Kennfeldtabelle hinterlegt, die einen Referenzdurchsatz für jede mögliche Änderung der Einstellung des Mahlwerks umfasst. Im Vorliegenden Beispiel wird aus der Änderung von der Einstellung vom vorhergehenden Brühvorgang zum direkt nachfolgenden Brühvorgang abgeleitet, dass die Mahldauer für den direkt nachfolgenden Brühvorgang gemäß Schritt a) um einen Korrekturfaktor von hier 4 Sekunden verlängert werden muss, um den Einfluss der Verstellung kompensieren zu können.

Für den Zielwert gemäß Schritt b) mit 13 Gramm sind in der Steuervorrichtung 5 genau 15 Sekunden hinterlegt. Gleichermaßen wird aus der hinterlegten Kennfeldtabelle für die feinste Einstellung des Mahlwerks für den nachfolgenden Brühvorgang abgeleitet, dass die Mahldauer gemäß Schritt c) um einen weiteren Korrekturfaktor von hier 2 Sekunden verlängert werden muss. Daher wird das Festlegen der tatsächlich benötigten Mahldauer in Schritt c) durch den Kaffeepulvermengenmesswerts 4 (hier +4 Sekunden), dem Zielwert aus Schritt b) (hier 15 Sekunden) und dem Einstellparameter (der hier +2 Sekunden ergibt) beeinflusst, denn die Mahldauer für den nachfolgenden Brühvorgang wird demnach mit 15 + 4 +2 = 21 Sekunden festgelegt. Daher wird für die tatsächliche Herstellung des benötigten Kaffeepulvers für den nachfolgend zuzubereitenden Ristretto in einer kräftigen Stärkeeinstellung das Mahlwerk 2 gemäß Schritt d) für 21 Sekunden angesteuert.

Die Steuervorrichtung 5 des Kaffeeautomaten 1 wurde im vorliegenden Beispiel entsprechend programmiert, indem über eine nicht dargestellte Internetschnittstelle mittels einer nicht dargestellten App ein Computerprogrammprodukt geladen wurde, umfassend Befehle, die bei der Ausführung des Programms durch eine Steuervorrichtung 5 des Kaffeeautomaten 1, die Steuervorrichtung 5 veranlassen, die Schritte des hier beschriebenen Verfahrens durchzuführen.

Dadurch wird nicht nur eine einfache, sehr präzise und gleichermaßen schnelle Regelung der Kaffeepulvermenge ermöglicht, sondern auch eine besonders nachhaltige Lösung der eingangs genannten Aufgabe bereitgestellt.

### BEZUGSZEICHENLISTE

- 1: Kaffeeautomat
- 2: einstellbares Mahlwerk
- 3: Potentiometer
- 4: Kaffeepulvermengenmesswert
- 5: Steuervorrichtung

## Patentansprüche

1. Verfahren zur Regelung einer Kaffeepulvermenge bei einem Kaffeeautomaten (1) mit einem einstellbaren Mahlwerk (2), umfassend die Schritte:
a) ermitteln oder beziehen eines Kennwerts einer mit dem Mahlwerk (2) gemahlenen Kaffeepulvermenge eines vorhergegangenen Brühvorgangs, insbesondere eines direkt vorhergegangenen Brühvorgangs,
b) ermitteln oder beziehen eines Zielwerts für eine für einen nachfolgenden Brühvorgang erforderte Zielkaffeepulvermenge,
c) festlegen einer Mahldauer für den nachfolgenden Brühvorgang, und
d) ansteuern des Mahlwerks für die in Schritt c) festgelegte Mahldauer,
wobei ein Einstellparameter des einstellbaren Mahlwerks (2) je zu Schritt a) und in Schritt c) ermittelt oder bezogen wird und wobei in Schritt c) der Kennwert aus Schritt a), der Zielwert aus Schritt b) und der Einstellparameter das Festlegen der Mahldauer beeinflussen.

2. Verfahren nach Anspruch 1, **dadurch gekennzeichnet, dass** der Einstellparameter eine Mahlgradeinstellung ist.

3. Verfahren nach Anspruch 2, **dadurch gekennzeichnet, dass** die Mahlgradeinstellung ein bezogener Mahlgradzielwert ist.

4. Verfahren nach Anspruch 2, **dadurch gekennzeichnet, dass** die Mahlgradeinstellung ein ermittelter Mahlgradmesswert ist.

5. Verfahren nach Anspruch 4, **dadurch gekennzeichnet, dass** der Mahlgradmesswert ein mittels eines Potentiometers (3) ermittelter Mahlscheibenabstand ist.

6. Verfahren nach einem der Ansprüche 1 bis 5, **dadurch gekennzeichnet, dass** der Kennwert der mit dem Mahlwerk gemahlenen Kaffeepulvermenge ein bezogener Kaffeepulvermengenzielwert ist.

7. Verfahren nach einem der Ansprüche 1 bis 5, **dadurch gekennzeichnet, dass** der Kennwert der mit dem Mahlwerk gemahlenen Kaffeepulvermenge ein ermittelter Kaffeepulvermengenmesswert (4) ist.

8. Verfahren nach einem der Ansprüche 1 bis 7, **dadurch gekennzeichnet, dass** zum Festlegen der Mahldauer anhand des Einstellparameters eine Referenzkurve berücksichtigt wird, die einen Referenzmahlwerksdurchsatz auf einer Referenzmahlgradeinstellung einschließt.

9. Kaffeeautomat (1), mit einem einstellbaren Mahlwerk (2) und einer Steuervorrichtung (5), **dadurch gekennzeichnet, dass** die Steuervorrichtung (5) eingerichtet und programmiert ist, die Schritte des Verfahrens gemäß einem der Ansprüche 1 bis 8 durchzuführen.

10. Computerprogrammprodukt, umfassend Befehle, die bei der Ausführung des Programms durch eine Steuervorrichtung (5), insbesondere die eines Kaffeeautomaten (1), die Steuervorrichtung (5) veranlassen, die Schritte des Verfahrens gemäß einem der Ansprüche 1 bis 8 durchzuführen.
